# EUROPEAN PATENT APPLICATION

(11) **EP 3 193 441 A1**
(43) Date of publication of application: **19.07.2017**
(21) Application number: 16151033.4
(22) Date of filing: 13.01.2016
(51) Int. Cl.: H02M 7/487, H02M 1/32

(54) **FAULT TOLERANT 3-LEVEL 3-PHASE NPP CONVERTER AND CONTROL METHOD THEREFOR**

(71) Applicant: GE Energy Power Conversion Technology Ltd, Rugby Warwickshire CV21 1BU (GB)
(72) Inventor: Stamenkovic, Dragan, 12277 Berlin (DE)
(74) Representative: Rüger, Barthelt & Abel

(57) **Abstract**

A 3-level 3-phase Neutral Point Piloted (NPP) converter and a method of controlling same are provided. The converter comprises three phase circuits (14a-c) connected in parallel with each other, each phase circuit comprising two outer legs (16a-c, 17a-c) and one inner leg (18a-c). The outer legs are connected in series with each other between DC input terminals (8, 9) of the converter with the connecting point therebetween defining a corresponding AC output terminal (19a-c) of the respective phase circuit (14a-c). Each outer leg comprises a controllable electronic switch (21a-c, 22a-c). The inner leg (18a-c) of each phase circuit is connected between a neutral DC point (13) and the corresponding AC output terminal (19a-c) and comprises a controllable bi-directional electrical switch (28a-c). A controller (32) controls operation of the 3-level NPP converter by driving the switches of the phase circuits (14a-c) to convert the DC voltage at its input to the desired AC voltage at its output. In a regular operation, the switches are driven by a switching sequence determined using space vector modulation based on selected combinations of basic voltage space vectors. In case of a fault in at least one of the switches in one of the phase circuits (14a-c), an appropriate fault mode is initiated, in which the at least one faulty switch is maintained in a defined state and a modified switching sequence is applied based on partly another selected combinations of basic voltage space vectors such as to allow continued operation of the converter with a modified performance.

## Description

### FIELD OF THE INVENTION

This invention relates generally to power converters and, more specifically, to the operation of a 3-level 3-phase Neutral Point Piloted (NPP) converter under fault condition of converter switches and a method of controlling a 3-level 3-phase NPP converter.

### BACKGROUND OF THE INVENTION

Converters are utilized in a variety of applications, such as for high speed motor and industrial machine drive applications and for renewable energy applications. For example, many hybrid or electric vehicles include an electric traction drive system that includes a 3-phase alternating current (AC) electric machine that is driven by a converter. The converter is supplied with power from a direct current (DC) power source, such as a storage battery. Windings of the 3-phase AC electric machine can be coupled to converter legs (phase circuits of the converter), wherein each converter leg includes a number of switches. Pulse width modulation (PWM) wave forms are applied to gate terminals to generate switching signals that are provided to the converter phase legs. The applied switching signals cause the switches of the converter legs to switch in an appropriate manner to convert the DC power to AC power. This AC power drives the AC electric machine, which in turn drives a shaft of a hybrid or electric vehicle drive train.

To operate 3-phase AC powered motors at varying speeds from a DC source, an algorithm called Space Vector Modulation (SVM) for the generation of the Pulse Width Modulation (PWM) is frequently used for the creation of AC wave forms. In this algorithm, the control signals for the three phase circuits that are required for operating the 3-phase machine are generated using space vectors and are phase-shifted by 120° relative to each other. The phase circuits include switches having a number of discrete switching states. Some of the switching states are active, i.e. they lead to a voltage, thus defining active switching basic voltage space vectors in a vector space. Some switching states are designated as null vectors and do not conduct any voltage to the load. The controller now determines a desired voltage space vector corresponding to a particular orientation of the flux density distribution in a 3-phase machine. The controller then determines and selects the two adjacent active basic voltage space vectors which limit a sector in which the desired voltage space vector is disposed. The controller then produces the desired voltage space vector using a combination of the two selected adjacent active switching basic voltage space vectors, which are applied using PWM in a ratio according to the relative angle of the desired voltage space vector, and one or more zero vectors, which are output to control the magnitude of the desired voltage space vector. Various SVM strategies exist to optimize the harmonic content of the output voltage and the switching losses.

In high-power applications and high-voltage applications, common 2-level converters, which produce output voltages with levels of either 0, positive, or negative DC voltage, have some limitations in handling larger currents and larger input voltages and also in operating at high-frequency due to switching losses and constraints of device ratings. To solve these problems, various multi-level converter topologies have been proposed. One common multi-level structure is a classical 3-level Neutral Point Clamped (NPC) converter which uses one DC source, two capacitors to split the DC voltage and provide a neutral point, and three NPC converter legs, each of which is composed of four switches connected in series and two diodes which clamp the connection points between the switches and the capacitors. The advantages of the 3-level NPC converters include that the voltage across any switch is only half of the DC bus voltage and thus switching losses are reduced, harmonics present in the output wave form are reduced, and the power rating is increased.

Another multi-level drive structure recently introduced is the 3-level Neutral Point Piloted (NPP) converter, which is similar to the NPC converter, but has the clamping diodes clamping the connection points between the switches and the capacitors replaced by bi-directional switches. This gives a controllable path for the load current through the clamping devices. The NPP topology can be operated at higher switching frequency compared to NPC converters for the same load current and the converter output wave form is improved, i.e. comprises reduced harmonics for a given frequency. Further, switching losses are less in the NPP converter than in the NPC converter. However, the control is more complex.

Although multi-level converters offer many advantages over 2-level converters, due to the increased number of switches, they are more prone to failures. As a result of overvoltage or overcurrent conditions, any switch in any phase circuit of the converter may fail open or short and then can no longer be actively switched. Normally, if a switch failure is detected, the converter is tripped and the drive system is shut down. However, this may be unsatisfactory or unacceptable in some applications and may even cause damage to the machine under operation. There is a desire to provide for continued operation of the converter after a failure of one or more of its switches such as to allow continued service of the AC electric machine controlled using the converter.

In view of the foregoing, it is an object of present invention to provide a 3-level converter, in particular for driving a 3-phase machine, and a control method therefor which can ensure continued operation of the machine after failure of one or more switches of the converter. This should be possibly done without the need for any additional circuitry and without unduly increasing the control complexity.

### BRIEF DESCRIPTION OF THE INVENTION

In order to solve this object, present invention provides a 3-level 3-phase Neutral Point Piloted (NPP) converter having the features of independent claim 1 and a method of controlling such a converter as claimed in independent claim 11. Preferred embodiments of present invention are subject-matter of the dependent claims.

According to one aspect of present invention, a 3-level 3-phase Neutral Point Piloted (NPP) converter is provided, which is in particular intended for driving a 3-phase machine and comprises a first and second, positive and negative, direct current (DC) input terminal, two capacitors or capacitor banks connected in series between the first and second DC input terminals and defining a neutral DC point or midpoint therebetween, three phase circuits connected in parallel with each other between the first and second DC input terminals, and a controller for controlling operation of the NPP converter. Each phase circuit comprises two outer legs and one inner leg or middle leg, wherein the outer legs are connected to the first and second DC input terminals, respectively, and to each other with the connection point therebetween defining a corresponding AC output terminal of the phase circuit. Each outer leg comprises a controllable electronic switch. The inner leg is connected between the neutral DC point and the corresponding AC output terminal and comprises a controllable bi-directional electrical switch. The controller controls operation of the NPP converter by driving the switches of the phase circuits according to the switching sequence determined using space vector modulation based on selected combinations of basic voltage space vectors. In case of a fault in at least one of the switches in one of the phase circuits, the controller is configured to initiate a fault mode in which the at least one faulty switch is maintained in a defined state and a modified switching sequence is applied based on partly another selected combinations of basic voltage space vectors.

The invention is based on the use of a 3-level 3-phase NPP converter which offers the already mentioned advantages of possible operation at high DC bus voltages by having switches connected in series, reduced output voltage harmonics and thus improved output voltage wave, low voltage drop over each switch of the converter, low dv/dt of output voltage, among others. Moreover, the 3-level NPP converter allows to discriminate whether the fault occurs in the bi-directional switch in the inner leg or in at least one of the switches in the outer legs and to initiate different fault modes based on this discrimination such as to allow optimized continued operation of the converter during the fault condition. The converter can then be further operated for a long period until the next maintenance, although with lower voltage or power output, but maintaining a high output signal quality, or with slightly lower quality but with maintained voltage or power output.

To achieve this, the NPP converter according to present invention may be configured to, in a basic or regular mode, produce desired voltage space vectors using determined combinations of two selected adjacent basic voltage space vectors in a vector space and at least one zero vector corresponding to switching states of all switches of all phase circuits, and, in the fault mode, to maintain the at least one faulty switch in a defined state and to apply a modified switching sequence by producing desired voltage space vectors using partly another combinations of two selected basic voltage space vectors corresponding to switching states of the non-faulty switches of the phase circuits and a zero vector. In the fault mode, the space vector modulation is based on a reduced number of space vectors out of the total number of basic voltage space vectors available in the basic mode. The use of the space vector modulation makes possible a relatively good degree and flexibility of control, while being relatively simple to implement.

In a preferred embodiment, the NPP converter of the invention allows to discriminate different fault cases and to initiate various corresponding fault modes. In particular, in a fault case in which at least one of the switches in the outer legs fails open or the bi-directional switch fails short, the controller may be arranged to initiate a first fault mode, and in another fault case in which the bi-directional switch fail open, the controller may be arranged to initiate a second fault mode.

In the first fault mode, the controller may then be arranged to switch or maintain the switches of the outer legs of the faulty phase circuit OFF by driving or maintaining them open, while switching or maintaining the bi-directional switch ON, i.e. driving it closed or maintaining it short-circuited, and to apply the modified switching sequence by producing desired voltage space vectors using combinations of two selected basic voltage space vectors corresponding to switching states of the switches in the non-faulty phase circuits and a zero vector produced using the bi-directional switch switched ON in the faulty phase circuit. In a preferred embodiment, the 3-level converter may then be operated as a 2-level converter assuring a high output signal quality.

Further, in the second fault mode, the controller may be arranged to switch or maintain the bi-directional switch OFF, i.e. switch or maintain it open, while alternately switching the switches of the outer legs ON, and to apply the modified switching sequence by producing desired voltage space vectors using combinations of two selected basic voltage space vectors corresponding to switching states of the switches in the non-faulty phase circuits and the one switch switched ON in the respective outer leg of the faulty phase circuit and a zero vector produced by switching ON the switches in all outer legs connected to the same positive or negative input terminal. In a preferred embodiment, the 3-level converter may then be further operated as a 3-level converter with a slightly reduced output signal quality. Alternatively, the converter may be further operated as a 2-level converter assuring a high output signal quality.

In a preferred embodiment of the NPP converter of any type mentioned above, each outer leg may comprise only one controllable electronic switch. This reduces switch losses and the control complexity. Alternatively, each outer leg may comprise a series of two or more controllable electronic switches such as to reduce voltage stress on the individual switches or, conversely, to increase the total DC voltage range applicable. In the latter case, all switches connected in series in one leg are preferably switched simultaneously, although another algorithms may be contemplated in which these switches are switched on or off one after another with a short delay therebetween, and not simultaneously.

In any NPP converter mentioned above, the bi-directional switch is preferably formed by a cascade of two switches connected in anti-series and each having a freewheeling diode connected in anti-parallel thereto. Although this is the preferred embodiment, other bi-directional switch configurations are also possible, such as two parallel paths, each having a series connection of a switch and a diode, both having the same forward direction, or a Graetz diode bridge with a diagonal switch, or other configurations currently known, such as dual anti-parallel reverse blocking IGBTs, or later developed.

In any NPP converter mentioned before, the controllable switches are preferably power semiconductor switches, in particular IGBTs, IGCTs, GTOs, MOSFETs, etc., wherein each semiconductor switch preferably has a freewheeling diode connected in anti-parallel thereto and arranged to accommodate the inductive motor load currents, for example.

The NPP converter of any type mentioned before may further comprise a sensor device including current sensors for sensing currents in at least some of the outer and inner legs of the phase circuits and voltage sensors for sensing voltage potentials at least at some of the input and output terminals. The sensed currents and voltages can be used to determine the condition of the switches of the converter.

In particular, the NPP converter mentioned before may further comprise a monitoring device for monitoring the current and voltage values sensed by the sensor device, and a logic for detecting conditions representing switches in the respective phase circuits of the converter failed open or short based on the sensed current and voltage values. This allows to discriminate the at least faulty switch and to select the appropriate fault mode to assure optimized further operation of the converter and the whole machine drive system.

In another aspect of the invention, a method of controlling a 3-level 3-phase Neutral Point Piloted (NPP) converter, in particular for driving a 3-phase machine, is provided. The NPP converter comprises a first and a second direct current (DC) input terminal, two capacitors or capacitor banks connected in series between the first and second DC input terminals and defining a neutral DC point or midpoint therebetween, and three phase circuits connected in parallel with each other between the first and second DC input terminals, each phase circuit comprising two outer legs and one inner or middle leg, wherein the outer legs are connected to the first and second DC input terminal, respectively, and to each other with the connection point therebetween defining a corresponding AC output terminal of the phase circuit, each outer leg comprising a controllable electronic switch, and wherein the inner leg is connected between the neutral DC point and the corresponding AC output terminal and comprises a controllable bi-direction electrical switch. The method comprises controlling operation of the NPP converter by driving the switches of the phase circuits according to a regular switching sequence determined using space vector modulation based on selected combinations of basic voltage space vectors. The method further comprises, in case of a fault in at least one of the switches in one of the phase circuits, initiating a fault mode in which the at least faulty switch is maintained in a defined state and a modified switching sequence is applied based on partly another selected combinations of basic voltage space vectors to ensure further operation of the converter and the respective machine drive system after a failure of one or more switches in the converter occurred.

Further embodiments of the method of controlling a 3-level 3-phase NPP converter correspond to the embodiments of the inventive NPP converter, as mentioned above, and may be implemented as corresponding method steps. The corresponding embodiments of the inventive method also benefit from the advantages of the above mentioned embodiments of the NPP converter.

Further aspects, objects and advantages will be apparent from the following detailed description when taken in conjunction with the accompanying drawings, from the drawings as such or the following claims.

### BRIEF DESCRIPTION OF THE DRAWINGS

The accompanying drawings, which are incorporated herein and constitute a part of the specification, illustrate a preferred embodiment of the invention and, together with the description, serve to explain the advantages and principles of the invention. Like reference numerals are used to refer to like elements throughout the drawings, wherein:
Fig. 1 is a block diagram of a motor drive system including a 3-level converter according to one embodiment of present invention;
Fig. 2 is a table illustrating various states of the switches of the 3-level converter of Fig. 1 with resulting AC voltages and space vectors;
Fig. 3 shows a space vector representation of switching states of the inventive 3-level voltage converter;
Fig. 4 shows a space vector representation of the 3-level inventor in a first fault case for illustrating a first fault mode;
Fig. 5 shows a space vector representation of the 3-level converter in a second fault case for illustrating a second fault mode; and
Fig. 6 shows a flow chart of a method of controlling the 3-level converter.

### DETAILLED DESCRIPTION OF THE INVENTION

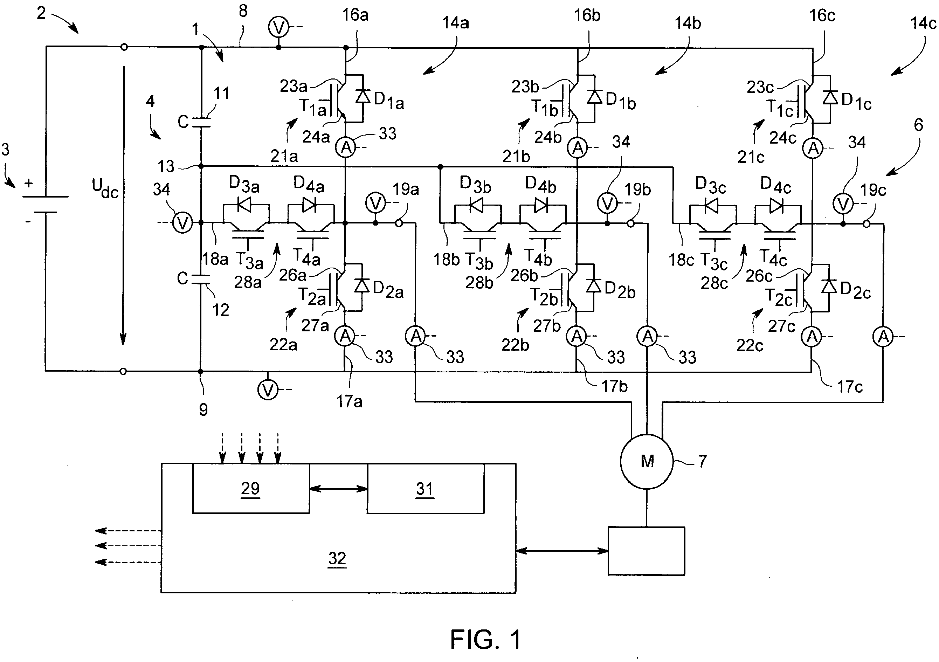

Referring to Fig. 1 a preferred embodiment of a 3-level 3-phase Neutral Point Piloted (NPP) converter 1 is shown in connection with a drive system 2 as an example for a variety of high-power and high-voltage applications in which the NPP converter according to present invention can be used. It will be understood that the NPP converter 1 can be used in various motor drive, utility interface and uninterruptible power supply applications as a means for converting direct current (DC) to alternating current (AC) electrical power.

In the exemplary embodiment shown in Fig. 1, the NPP converter 1 is connected to a DC power source 3 on its DC input side 4 and is connected at its AC output side 6 to a multi-phase machine, such as a 3-phase motor 7 which can be a variable torque variable speed motor for high power industrial or vehicle applications. The source 3 can be any source of DC power, such as a battery, a photovoltaic source or a DC power source obtained from an AC power source through rectification, for example. The NPP converter 1 as shown in Fig. 1 is intended herein as an inverter for converting DC power from the power source 3 to AC power provided at its output 6 for driving the motor 7.

As further shown in Fig. 1, the NPP converter 1 comprises a first or positive DC input terminal 8 connected to the positive pole of the DC power source 3 and a second or negative DC input terminal 9 which is connected to the negative pole of the DC power source 3. DC link capacitors (or capacitor banks) C 11 and 12 are connected in series with each other and between the positive DC input terminal 8 and the negative DC input terminal 9. The capacitors 11, 12 define a neutral DC point or midpoint 13 therebetween, which is capable of accepting and storing either positive or negative charge. The neutral point 13 allows the converter to treat the DC input terminals 8, 9 as though there were two equal DC sources connected in series defining three power nodes, i.e. a positive DC bus node 8, a negative DC bus node 9 and a neutral node 13.

In the embodiment shown in Fig. 1, the NPP converter comprises three phase circuits including a phase circuit 14a for phase A, a phase circuit 14b for phase B and a phase circuit 14c for phase C. The phase circuits 14a, 14b and 14c are connected in parallel with each other between the positive and negative bus nodes 8, 9. Each of the phase circuits 14a, 14b, and 14c is electrically connected to the positive node 8, the neutral point 13, and the negative node 9. The phase circuits 14a, 14b, and 14c have the same configuration as is discussed in more detail below.

The phase circuit 14a comprises a first outer leg 16a, which is the upper leg in Fig. 1, a second outer or lower leg 17a in Fig. 1, and an inner or middle leg 18a. The outer legs 16a, 16b are connected to the positive and negative nodes 8 and 9, respectively, and to each other, wherein the connection point between the outer legs 16a, 17a forms a corresponding AC output terminal or node 19a of the phase circuit 14a. The inner or middle leg 18a is connected between the neutral point 13 and the AC output terminal 19a.

Each of the outer legs 16a, 17a comprises a controllable electronic switch 21a and 22a, respectively, which is preferably a power semiconductor switch suitable for high power applications. More specifically, the switches 21a, 22a are advantageously designed as IGBTs (Insulated Gate Bipolar Transistors), but could also be other power semiconductors, such as field effect transistors, in particular MOSFETs, gate turn off (GTO) thyristors, IGC thyristors (Integrated Gate-Commutated Thyristors, IGCTs) and other comparable switchable electronic components. The terms collector, emitter and gate electrode as used herein relate to the preferred usage of IGBTs as the power semiconductor switches in the phase circuits 14a-c. A skilled person will be familiar with the corresponding terms for the terminals and electrodes of other comparable semiconductor switches and will apply the description herein accordingly thereto.

Herein, the controllable electronic switch 21a is formed by an IGBT switch T₁ₐ which has a collector terminal 23a connected to the positive node 8 and an emitter terminal 24a connected to the output node 19a. A freewheeling diode D₁ₐ is connected between the collector and emitter terminals 23a, 24a in anti-parallel to the IGBT T₁ₐ. Similarly, switch 22a in the second outer leg 17a is formed by an IGBT T₂ₐ which has a collector terminal 26a connected to the emitter terminal 24a of switch 21a and an emitter terminal 27a connected to the negative node 9. A freewheeling diode D₂ₐ is connected in anti-parallel to the IGBT T₂ₐ. The freewheeling diodes D₁ₐ and D₂ₐ serve to carry load current when the corresponding power switch T₁ₐ or T₂ₐ opens and to protect the corresponding switch against inadmissibly high over voltages or reverse voltages.

The inner leg 18a comprises a bi-directional switch 28a disposed therein. In the configuration shown in Fig. 1, the bi-directional switch 28a is formed by a cascade of two IGBTs T₃ₐ and T₄ₐ which are connected in anti-series and each have a freewheeling diode D₃ₐ and D₄ₐ connected in anti-parallel thereto. It will be understood that other configurations of a bi-directional switch could be used instead. For example, the bi-directional switch 28a could be formed by two parallel paths each having a series connection of a switch and a diode with the switch and the diode having the same forward direction. A further configuration might include only one switch and four diodes arranged as a Graetz bridge around the switch. It is only important that the bi-directional switch 28a comprises at least one switching element in combination with some rectifying elements and is configured to be switched in a controllable manner such as to allow current flow through the bi-directional switch 28a in both directions.

Similarly, the phase circuit 14b for phase B has a first outer leg 16b and a second outer leg 17b which are connected to the positive node 8 and negative node 9, respectively, and to each other with the connection point therebetween defining a corresponding AC output terminal or node 19b. The phase circuit 14b further comprises an inner leg 18b connected between the neutral point 13 and the corresponding AC output terminal 19b. Each of the outer leg 16b and 17b comprises a switch 21b and 22b, respectively, each formed herein as an IGBT T_{1b}, T_{2b} configured and connected in the same manner as the IGBTs T₁ₐ, T₂ₐ in the phase circuit 14a. Each IGBT T_{1b}, T_{2b} has a freewheeling diode D_{1c} and D_{2c}, respectively, connected anti-parallel thereto. The inner leg 18b comprises a bi-directional switch 28b which again is formed by a cascade of two IGBTs T₃ₐ, T₄ₐ connected in anti-series and each having a freewheeling diode D₃ₐ and D₄ₐ, respectively, connected in anti-parallel thereto.

The phase circuit 14c for phase C includes a first and second outer leg 16c and 17c, respectively, which are connected to the positive and negative node 8 and 9, respectively, and to each other, wherein the connection point therebetween defines the corresponding AC output terminal or node 19c. The phase circuit 14c further has an inner leg 18c connected between the neutral point 13 and the AC output terminal 19c. Each of the outer legs 16c, 17c comprises a controllable electronic switch, in particular a power switch in the form of an IGBT T_{1c} and T_{2c}, respectively, with a freewheeling diode D_{1c} and D_{2c}, respectively, being connected anti-parallel to each IGBT. The inner leg 18c comprises a bi-directional switch 28c which is formed by a cascade of two IGBTs T_{3c} and T_{4c}, respectively, with freewheeling diodes D_{3c} and D_{4c} being respectively connected in anti-parallel thereto.

As may be further taken from Fig. 1, the NPP converter further comprises a sensor device 29, a monitoring device 31 and a control device 32. The sensor device 29 comprises a plurality of sensing elements for sensing parameters within the circuit of the NPP converter 1. In particular, the sensor device 29 may comprise current sensors 33 arranged to sense currents in at least some of the bus nodes 8, 9 and the inner and outer legs 16a-c and 17a-c of the phase circuits 14a-c as well as voltage sensors 34 for sensing voltage potentials at at least some of the input and output terminals 8, 9, 13, and 19a-c. It will be understood that not all currents in all internal path and not all voltage potentials at all nodes of the circuit of the NPP converter need to be sensed in order to obtain all current and voltage values required for the control. Rather, related currents and voltages can be calculated from sensed currents and voltages using common electrical relationships, such as Kirchhoff's current and voltage laws. Moreover, it should be noted that the current and voltage sensors 33 and 34 are connected via communication lines to the sensor device 29, the monitoring device 31 and/or the control device 32, but these communication lines have been omitted for clarity of the figure.

The monitoring device 32 is used to monitor the sensed current and voltage values to monitor the current operating conditions. In particular, the monitoring device is arranged to also detect faulty conditions which occur in the NPP converter based on the sensed current and voltage values. For example, if a switch is intended to be open but a current value in the path including the switch differs from zero then this conditions indicates a failure of the switch, namely that the switch has failed short (short-circuited). The same applies if the voltage sensed across the switch is zero but according to the operating conditions should be non-zero. On the other hand, if the current in the path of a switch is zero, but the switch is closed and a current should be flowing, then this indicates that the switch might have failed open (open-circuited). The same may be the case if the voltage across the switch is non-zero but the switch is assumed to be closed. As soon as the monitoring device detects that anyone of the switches in the inner and outer legs 16a-c, 17a-c, and 18a-c of the phase circuits 14a-c has failed short or open, the monitoring device 31 notifies this to the control device 32 which can then take appropriate correcting control measures. This is described in more detail below.

The control device is arranged to control operation of the NPP converter based on present operating parameters and as required for the respective application, such as to drive the 3-phase motor to operate at a specific torque and a specific speed. To this end, the control device drives the switches 21a-c, 22a-c and 28a-c of the phase circuits 14a-c through respective gate drivers of the IGBT switches using specific switching sequences to achieve the appropriate phase voltages and currents at the AC output terminals 19a-c to drive the motor 7.

In order to understand operation of the NPP converter described so far, the switching modes of one phase circuit will be described first, wherein phase circuit 14a is taken herein as an example. In the first switching mode, a gating pulse is provided to the switch 21a in the upper leg 16a to switch it on. The other switches 22a and 28a in the phase circuit 14a are open. The positive load current flows through the positive input terminal 8, the switch 21a, the output terminal 19a, the motor 7 or other load to the neutral point 13 between the DC link capacitors 11 and 12. The motor or load 7 is connected across the AC output terminal node 19a and the neutral point 13. In this switching mode, load voltage is half of the positive DC input voltage, i.e. +U_{dc}/2.

In a second switching mode gating pulses are applied to the bi-directional switch 28a only. This switching mode is also known as a freewheeling mode, wherein the energy stored in the load inductance may freewheel through the load and the bi-directional switch to the load again. This energy is dissipated in the internal resistance of the load inductor. In this switching mode, load voltage is zero.

In a further switching mode, gating pulses are applied to the lower switch 22a in the lower leg 17a of phase circuit 14a. The negative current flows through the neutral point 13, the motor or load 7, the switch 22a, and the negative input terminal 9. In this switching mode, load voltage is half of the negative DC input voltage, i.e. -U_{dc}/2.

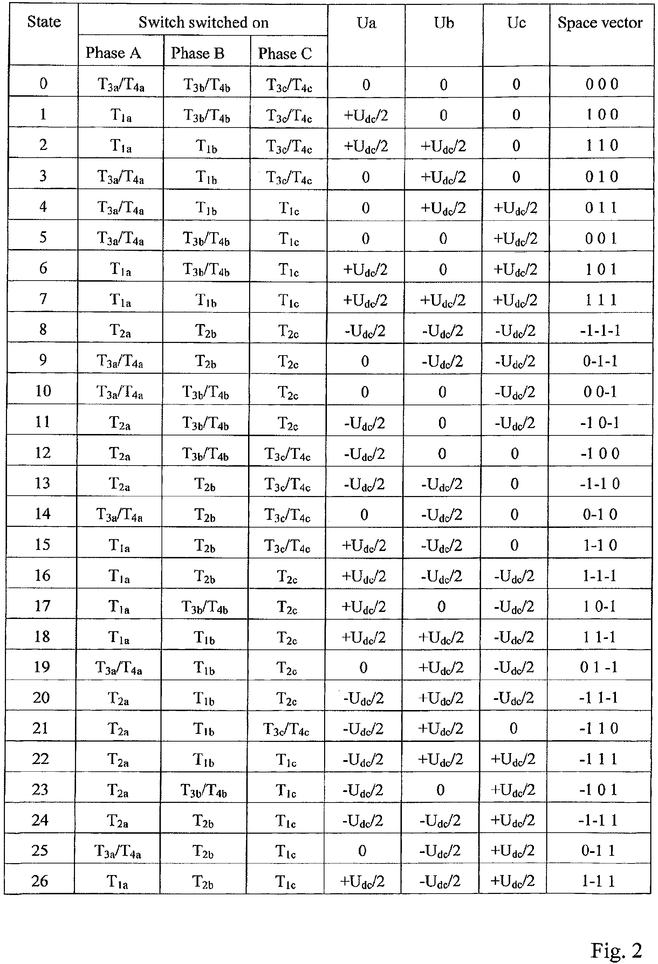

Each phase circuit 14a-c can take three different switch positions. This results in 3³ possible switch positions and thus twenty-seven switch combinations. Each switch combination results in a specific voltage constellation between the phases and thus in a specific voltage space vector. The switch combinations, phase voltages and space vectors are shown in the table in Fig. 2.

Taking the first line of Fig. 2 as an example, if all switches in the outer legs 16a-c, 17a-c are off and the switches 28a-c in the inner legs 18a-c are all on, then this provides a direct current path between the neutral point 13 and the output nodes 19a-c, wherein all output nodes are short-circuited and have the potential of the neutral point 13, i.e. 0 V. In a convenient shorthand a space vector which represents the switching state of the phases in a sequence being phase A - phase B - phase C his can be represented as 000 meaning that all phase outputs are connected to the neutral node (0V).

Taking the second line as a further example, if phase A has its upper switch 21a activated (ON) and the bi-directional switches 28b, 28c are activated in phase B and phase C with all other switches being OFF, phase A has a current path between the positive node 8 and the output node 19a and thus the positive DC input voltage potential of U_{dc}/2, wherein phases B and C connect to the neutral point 13. This results in the space vector 100 (or positive-neutral-neutral).

Taking the combination 25 as a still further example. Phase A has its bi-directional switch 28a ON and connects to neutral point 13, phase B has its lower switch 22b ON and connects to the negative node 9, and phase C has its upper switch 21c ON and connects to the positive node 8. This results in the space vector 0-11 (or neutral-negative-positive).

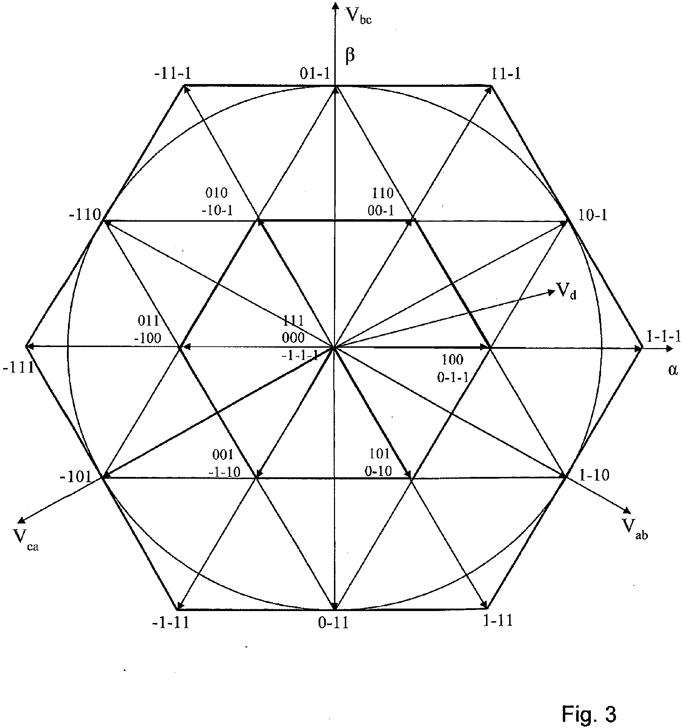

The switch combinations and corresponding space vectors can be represented in a convenient manner in a space vector diagram as shown in Fig. 3. Therein, eighteen possible vectors which result from the twenty-seven possible switch combinations listed in Fig. 2 are shown. Further, the three axes representing the voltage differences between the output nodes 19a, 19b, and 19c V_{ab}, V_{BC}, and V_{ca} are shown. It will be appreciated that six main vectors define the six states of the switches where only the positive or negative nodes 8 or 9 are implicated. Starting from the V_{bc} axis and listing from the clockwise direction, the six main vectors are 11-1, 1-1-1, 1-11, -1-11, -111, and -11-1. These six vectors defining the major axes of the outer hexagon are the "large vectors". Six medium vectors introduce the moderating influence of the neutral point 13 and represent vectors to the midpoint of these sides of the defined outer hexagon. Beginning from the axis V_{bc} again, these "medium vectors" include switching combinations 01-1, 10-1, 1-10, 0-11, -101, and -110. Small vectors are aligned with the six major vectors and are generated where two of the switching paths are directed to the neutral point 13 or to this same extreme node. Because there exist two equivalent ways to generate a same vector, these small vectors are suitably represented as ordered pairs (110, 00-1), (100, 0-1-1), (101, -1-10), (001, -1-10), (011, -100), and (010, -10-1). Finally, there exists three zero vectors which are the result of all switches leading to the same node 8, 9 or 13 being ON. These zero vectors are 111, 000, and -1-1-1.

In order to generate 3-phase power to drive the 3-phase motor 7 with full power, the switching state jumps alternately from large vector to medium vector and back to large vector at the outer hexagon as the state of the converter 1 moves one switch at a time in the counter-clockwise direction around the outer hexagon shown in Fig. 3. Assuming a starting point at the V_{bc} axis, where the switching state is 01-1, the first phase moves to the negative for a resulting -11-1, the third phase C then moves to the neutral point for a resulting state -110 and the third phase C then moves to the positive node for a -111 state. The converter continues in a similar fashion all the way around the hexagon, thereby defining a rough sinusoid at each of the phase output nodes.

In order to obtain a smoother sinusoid a technique called Space Vector Pulse Width Modulation (SVPWM) is used according to present invention where a desired voltage phasor within the whole vector space shown in Fig. 3 is produced using a combination of at least two adjacent of the basic voltage space vectors shown in Fig. 3. In particular, in order to be able to set a desired voltage state vector, during a PWM period, an active state is set for a time Tₖ and an adjacent active state is set for a time Tₖ₊₁, so that between these two states only one switch has to be switched on and one switch has to be switched off. For example, considering the desired vector V_{d} in Fig. 3, the adjacent basic voltage space vectors 1-1-1 and 10-1 would be alternately output for the time durations Tₖ and Tₖ₊₁, respectively, so that the ratio of these times Tₖ/Tₖ₊₁ corresponds to the angle of the desired vector V_{d}. A null vector is set for the remaining time such as to obtain the desired magnitude of the desired vector V_{d}.

Thus, in the basic or regular mode, the control device 32 controls operation of the NPP converter 1 by driving the switches of the phase circuits 14a-c according to a switching sequence determined using space vector modulation which, as explained above, is based on selected combinations of the active basic voltage space vectors shown in Fig. 3. Once the monitoring device detects a fault in at least one of the switches 21a-c, 22a-c, and 28a-c of the phase circuits 14a-c, the control device 32 is configured to initiate a specific fault mode in which the at least one faulty switch is maintained in a defined state and a modified switching sequence is applied based on partly another selected combinations of active basic voltage space vectors. In doing this, a shutdown of the converter, as is usually done with conventional multi-level converters, can be avoided and continued operation of the converter 1 can be assured during the fault condition such that the converter 1 can be further operated until the next maintenance and then repaired or replaced. This can greatly increase service time and reduce downtime of the whole drive system.

The advantageous combination of the use of a multi-level NPP converter 1 and the control according to present invention allows to select an appropriate switching strategy depending on the fault case detected. This will be discussed in more detail in the following. For the sake of clarity this discussion of possible fault modes will be confined to faults occurring in phase A. Persons skilled in the art will readily understand that this discussion accordingly also applies to phases B and C.

In a first fault case, it is assumed that one of the outer switches 21a and 22a in phase A fails open or both the switches fail open. Then, if such a fault is detected using the current sensors 33 and/or voltage sensors 34 mentioned above, the control device 32 makes sure that the bi-directional switch 28a, i.e. both the IGBTs T₃ₐ and T₄ₐ thereof, stay on while the switches 21a and 22a in the outer legs 16a, 17a are off all the time. If they are not yet in this defined state, they will be gated to switch accordingly. Otherwise, the switches will be maintained in their respective defined states. For example, the respective outer switch which has failed open is maintained in the open state while an outer IGBT which has not failed open is caused to open. Then, the modified switching sequence can be applied.

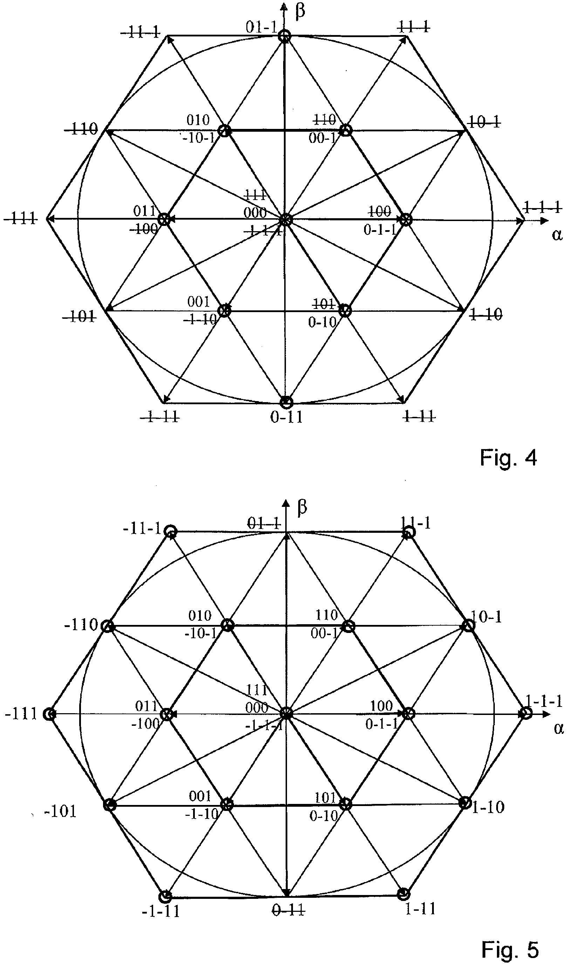

Fig. 4 shows a space vector diagram similar to that of Fig. 3 but showing the space vectors which are available for this fault case. In Fig. 4, the basic voltage space vectors which are invalid, i.e. cannot be output due to the at least one outer IGBT 21a and/or 22a having failed open, are crossed out. As may be seen, due to the redundancy achieved with present configuration of the NPP converter 1 and the corresponding control, there remains a distribution of basic voltage space vectors including one zero vector 000, two medium vectors, 0+1-1 and 0-1+1, and the six small vectors forming the inner, smaller hexagon. These vectors together with the zero-vector correspond to a distribution of basic space vectors of a common two-level converter. Thus, if the first fault case occurs, the control device 32 changes the switching sequence to a modified switching sequence which is based on these vectors of the inner, smaller hexagon and the zero vector 000. In other words, the converter 1 is further operated as a two-level converter with a lower output voltage and lower power output than in the regular three-level operation mode but assuring continued operation of the converter 1 and the whole drive system 2.

In a further fault case, one or both of the inner IGBTs T₃ₐ and T₄ₐ of the bi-directional switch 28a can fail short. In this case, the control device 32 adopts the same first fault mode as in the previous case. I.e., the control device 32 ensures that the inner two IGBTs T₃ₐ and T₄ₐ remain on while switching or maintaining the outer switches 21a, 22a into or in the off state all the time. The space vectors for this case are the same as in the previous case, i.e. those shown in Fig. 4. Again, the control device may further operate the converter 1 and the drive system 2 with a modified switching sequence based on the active basis voltage space vectors corresponding to a two-level converter.

In a still further fault case, one or both of the inner IGBTs T₃ₐ and T₄ₐ of the bi-directional switch 28a in the inner leg 18a may fail open. In this fault case, the control device may initiate a further fault mode wherein it ensures that the inner leg 18a remains open all the time by switching anyone of the IGBTs T₃ₐ and T₄ₐ which has not failed open into the off state. Further, the control device switches the outer legs 16a and 17a of phase A alternately between the potentials of the positive and negative nodes 8, 9, i.e. between +U_{dc}/2 and -U_{dc}/2.

The basic space vectors for this case are shown in Fig. 5. Again, the invalid basic space vectors which cannot be achieved are crossed out. The valid basic vector states which can be achieved are surrounded by a circle. As may be seen, only the two active states 01-1 and 0-11 are invalid. In this case, instead of using the invalid space vector 0-11, for example, in the fault mode the control device uses a combination of the space vectors 1-11 and -1-11 instead by alternately switching the switches 21a and 22a in the outer legs 16a and 17a into complementary states. In this manner any desired space vector within the sector delimited by the zero vector and the space vectors 1-11 and -1-11 can be approximately produced. Care must be taken to avoid that both the switches 21a and 22a in the outer legs 16a and 17a are being switched on at the same time to prevent a short-circuit of the DC power source 3.

Similarly, instead of outputting the space vector 01-1, in the fault mode, the control device outputs a combination of the basic space vectors 11-1 and -11-1 by alternately switching the switches 21a and 22a of the outer legs 16a and 17a into complementary states. In this manner, any desired vector within the sector delimited by the zero vector and the active basic space vectors 11-1 and -11-1 can be approximately achieved. Thus, the control device 32 may further operate the converter 1 in the 3-level mode, although with a slightly lower quality of the output voltage compared to the regular operation. It can also run the converter 1 at full power with symmetrical load.

As may further be taken from Fig. 5, as an alternative, the control device 32 may also operate the converter 1 as a two-level converter with lower output voltage or power output, but with high quality.

Consequently, according to present invention, continued operation of the converter 1 during various fault conditions can be assured and the motor 7 or other load can be further driven if desired. Moreover, the use of the NPP converter 1 configuration allows different fault strategies in reaction to different fault cases which makes it possible to select the best suited fault strategy for the respective failure in the converter and the application in which it is used.

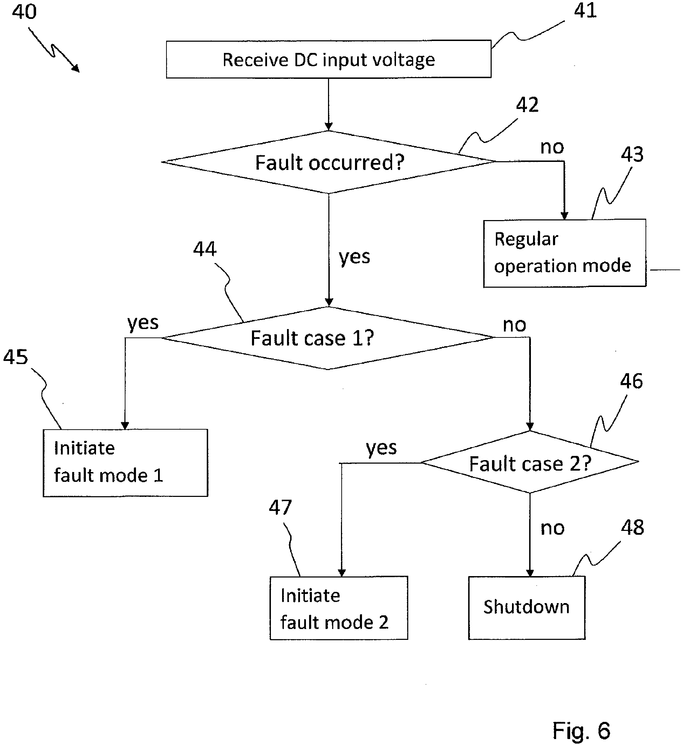

Fig. 6 shows a flow chart 40 of the method of controlling a 3-level NPP converter, such as the converter of Fig. 1. In step 41, the method includes receiving a DC voltage at the input terminals of the converter for power conversion into an AC voltage at its output terminals.

In step 42, the method includes determining whether a fault in one of the switches in any of the phase circuits of the power converter has occured. The determining may include sensing currents in at least some of the outer and inner legs of the phase circuits and/or sensing voltage potentials at at least some of the input and output terminals of the phase circuits of the converter. This can be done using current and voltage sensors appropriately disposed in the phase circuits of the converter. The determining may further include monitoring the current and voltage values sensed by the current and voltage sensors and detecting conditions representing switches having failed open or short based on the sensed current and voltage values. For example, if a current flows through a path where a particular transistor switch should be open, the transistor or switch is presumed to be faulty or short-circuited. The same applies if voltage sensors on either side of the switch indicate equal voltage, although this should not be the case. On the other hand, if the voltage on either side of a switch should be the same, but is not, the switch is presumed to have failed open or open-circuited.

If no fault is detected in the phase circuits of the converter, the method 40 proceeds with a basic or regular operation where a controller controls the operation of the converter by driving the switches of its phase circuits according to a switching sequence determined using space vector modulation based on selected combinations of basic voltage space vectors (step 43).

If a fault is detected in the converter circuit, the method further determines in step 44 whether a first fault case exists in which at least one of the switches in the outer legs of the 3-level NPP converter, such as the switches 21a-c, 22a-c in the outer legs 16a-c, 17a-c of the converter of Fig. 1, has failed open or in which the bi-directional switch, e.g. one of the switches T_{3a-c}, T_{4a-c} of the bi-directional switches 28a-c, has failed short. If this is the case, i.e. the first predetermined fault case exists, the method proceeds to step 45 and implements a first fault mode.

In the first fault mode, the switches of the outer legs of the faulty phase circuit are switched or maintained off while switching or maintaining the bi-directional switch on, and a modified switching sequence is applied by producing desired voltage space vectors using combinations of at least two selected basic voltage space vectors corresponding to varying switching states of the switches of the non-faulty phase circuits and the on state of the bi-directional switch in the faulty phase circuit. A zero vector may be produced using the on state of the bi-directional switch in the faulty phase circuit. In other words, the 3-level NPP converter can be operated as a 2-level converter.

If it is determined in step 44 that the first fault case does not exist the method then determines whether a second predetermined fault case exists, in which at least one of the switches of the bi-directional switch in any phase circuit of the converter has failed open (step 46). If this is the case, the method continues in step 47 with initiating a second fault mode.

In the second fault mode, all switches of the faulty bi-directional switch are switched or maintained off while alternately switching the switches of the outer legs on. A modified switching sequence is applied by producing desired voltage space vectors using combinations of at least two selected basic voltage space vectors corresponding to varying switching states of the switches of non-faulty phase circuits and the one switch switched on in the respective outer leg of the faulty phase circuit. A zero vector is produced by switching on the switches in all outer legs connected to the same, either positive or negative, input terminal. In other words, the converter is further operated as a 3-level converter, but an invalid vector state in the outer hexagon, as shown in Figs. 5, where the faulty bi-directional switch should have been closed (such as 01-1), is replaced by alternately outputting adjacent vector states in which either the switch in the upper outer leg, such as 21a, or the switch in the lower outer leg, such as switch 22a, is output, thereby alternately producing the states 11-1 and -11-1 with the required time duration ratio.

Thus, the converter can still be run in the 3-level mode with high output voltage or power output, although with slightly lower quality of the output voltage compared to the regular operation. Alternatively, the converter can be run in a 2-level mode instead if this is adequate for the respective application.

If it is determined in step 46 that the second fault case does not exist, this indicates that another failure exists in the converter which cannot be reacted to by modifying the switching sequence only. In this case, the method 40 may proceed to step 48 and shut down the converter and the corresponding drive system for safety reasons.

A 3-level 3-phase Neutral Point Piloted (NPP) converter and a method of controlling same are provided. The converter comprises three phase circuits 14a-c connected in parallel with each other, each phase circuit comprising two outer legs 16a-c, 17a-c and one inner leg 18a-c. The outer legs are connected in series with each other between DC input terminals 8, 9 of the converter with the connecting point therebetween defining a corresponding AC output terminal 19a-c of the respective phase circuit 14a-c. Each outer leg comprises a controllable electronic switch 21a-c, 22a-c. The inner leg 18a-c of each phase circuit is connected between a neutral DC point 13 and the corresponding AC output terminal 19a-c and comprises a controllable bi-directional electrical switch 28a-c. A controller 32 controls operation of the 3-level NPP converter by driving the switches of the phase circuits 14a-c to convert the DC voltage at its input to the desired AC voltage at its output. In a regular operation, the switches are driven by a switching sequence determined using space vector modulation based on selected combinations of basic voltage space vectors. In case of a fault in at least one of the switches in one of the phase circuits 14a-c, an appropriate fault mode is initiated, in which the at least one faulty switch is maintained in a defined state and a modified switching sequence is applied based on partly another selected combinations of basic voltage space vectors such as to allow continued operation of the converter with a modified performance.

## Claims

1. Three-level three-phase Neutral Point Piloted (NPP) converter, in particular for driving a three-phase machine, comprising:
a first and a second direct current (DC) input terminal (8, 9) ;
two capacitors (11, 12) connected in series between the first and second DC input terminals (8, 9) and defining a neutral DC point (13) therebetween;
three phase circuits (14a-c) connected in parallel with each other between the first and second DC input terminals (8, 9), each phase circuit (14a-c) comprising two outer legs (16a-c, 17a-c) and one inner leg (18a-c),
wherein the outer legs (16a-c, 17a-c) are connected to the first and second DC input terminals (8, 9), respectively, and to each other with the connection point therebetween defining a corresponding AC output terminal (19a-c) of the respective phase circuit(14a-c), each of the outer legs (16a-c, 17a-c) comprising a controllable electronic switch (21a-c, 22a-c),
wherein the inner leg (18a-c) is connected between the neutral DC point (13) and the corresponding AC output terminal (19a-c) and comprises a controllable bidirectional electrical switch (28a-c); and
a controller (32) for controlling operation of the NPP converter (1) by driving the switches (21a-c, 22a-c, 28a-c) of the phase circuits (14a-c) according to a switching sequence determined using space vector modulation based on selected combinations of basic voltage space vectors,
wherein in case of a fault in at least one of the switches (21a-c, 22a-c, 28a-c) in one of the phase circuits (14a-c), the controller (32) is configured to initiate a fault mode in which the at least one faulty switch is maintained in a defined state and a modified switching sequence is applied based on partly another selected combinations of basic voltage space vectors.

2. NPP converter according to claim 1, wherein in a basic mode, the controller (32) is configured to produce desired voltage space vectors using determined combinations of at least two selected adjacent basic voltage space vectors corresponding to varying switching states of all switches (21a-c, 22a-c, 28a-c) of all phase circuits (14a-c), and wherein in the fault mode, the controller is configured to maintain the at least one faulty switch in a defined state and to apply a modified switching sequence by producing desired voltage space vectors using partly another combinations of at least two selected basic voltage space vectors corresponding to varying switching states of the non-faulty switches of the phase circuits (14a-c) only.

3. NPP converter according to claim 1 or 2, wherein in a fault case, in which at least one of the switches (21a-c, 22a-c) in the outer legs (16a-c, 17a-c) fails open or the bidirectional switch (28a-c) fails short, the controller (32) is configured to initiate a first fault mode, and in another fault case, in which the bidirectional switch (28a-c) fails open, the controller (32) is arranged to initiate a second fault mode.

4. NPP converter according to claim 3, wherein in the first fault mode, the controller (32) is arranged to switch or maintain the switches (21a-c, 22a-c) in the outer legs (16a-c, 17a-c) of the faulty phase circuit OFF while switching or maintaining the bidirectional switch (28a-c) ON, and to apply the modified switching sequence by producing desired voltage space vectors using combinations of at least two selected basic voltage space vectors corresponding to varying switching states of the switches in the non-faulty phase circuits and the ON state of the bidirectional switch in the faulty phase circuit.

5. NPP converter according to claim 3 or 4, wherein in the second fault mode, the controller (32) is arranged to switch or maintain the bidirectional switch (28a-c) in the faulty phase circuit OFF while alternately switching the switches (21a-c, 22a-c) in the outer legs (16a-c, 17a-c) ON, and to apply the modified switching sequence by producing desired voltage space vectors using combinations of at least two selected basic voltage space vectors corresponding to varying switching states of the switches in the non-faulty phase circuits and the one switch switched ON in the respective outer leg of the faulty phase circuit.

6. NPP converter according to anyone of the preceding claims, wherein each of the outer legs (16a-c, 17a-c) comprises only one controllable electronic switch (21a-c, 22a-c).

7. NPP converter according to anyone of the preceding claims, wherein the bidirectional switch (28a-c) is formed by a cascade of two switches (T_{3a-c}, T_{4a-c}) connected in anti-series and each having a freewheeling diode (D₃ₐ, D₄ₐ) connected in anti-parallel thereto.

8. NPP converter according to anyone of the preceding claims, wherein the controllable switches (21a-c, 22a-c, 28a-c) are power semiconductor switches, each semiconductor switch preferably having a freewheeling diode (D_{1a-c}, D_{2a-c}, D_{3a-c}) connected in anti-parallel thereto.

9. NPP converter according to anyone of the preceding claims, further comprising a sensor device (29) comprising current sensors (33) for sensing currents in at least some of the outer and inner legs (16a-c, 17a-c) of the phase circuits (14a-c) and/or voltage sensors (34) for sensing voltage potentials at at least some of the input and output terminals (8, 9, 13, 19a-c).

10. NPP converter according to claim 9, further comprising a monitoring device (31) for monitoring the current and voltage values sensed by the sensor device (29) and comprising a logic for detecting conditions representing switches (21a-c, 22a-c, 28a-c) failed open or short based on the sensed current and voltage values.

11. A method of controlling a three-level three-phase Neutral Point Piloted (NPP) converter (1), in particular for driving a three-phase machine, the NPP converter (1) comprising: a first and a second direct current (DC) input terminal (8, 9); two capacitors (11, 12) connected in series between the first and second DC input terminals and defining a neutral DC point (13) therebetween; three phase circuits (14a-c) connected in parallel with each other between the first and second DC input terminals (8, 9), each phase circuit (14a-c) comprising two outer legs (16a-c, 17a-c) and one inner leg (18a-c), wherein the outer legs are connected to the first and second DC input terminals, respectively, and to each other with the connection point therebetween defining a corresponding AC output terminal (19a-c) of the phase circuit, each of the outer legs (16a-c, 17a-c) comprising a controllable electronic switch (21a-c, 22a-c), wherein the inner leg (18a-c) is connected between the neutral DC point (13) and the corresponding AC output terminal (19a-c) and comprises a controllable bidirectional electrical switch (28a-c); the method comprising:
controlling (43) operation of the NPP converter (1) by driving the switches (21a-c, 22a-c, 28a-c) of the phase circuits (14a-c) according to a switching sequence determined using space vector modulation based on selected combinations of basic voltage space vectors; and
in case of a fault in at least one of the switches (21a-c, 22a-c, 28a-c) in one of the phase circuits (14a-c), initiating a fault mode (45, 47) in which the at least one faulty switch is maintained in a defined state and a modified switching sequence is applied based on partly another selected combinations of basic voltage space vectors.

12. The method according to claim 11, wherein in a basic mode, the controlling comprises producing desired voltage space vectors using determined combinations of at least two selected adjacent basic voltage space vectors corresponding to varying switching states of all switches (21a-c, 22a-c, 28a-c) of all phase circuits (14a-c), and wherein in the fault mode, the at least one faulty switch is maintained in a defined state and a modified switching sequence is applied by producing desired voltage space vectors using partly another combinations of at least two selected basic voltage space vectors corresponding to varying switching states of the non-faulty switches of the phase circuits only.

13. The method according to claim 11 or 12, wherein in a fault case (44), in which at least one of the switches (21a-c, 22a-c) in the outer legs (16a-c, 17a-c) fails open or the bidirectional switch (28a-c) fails short, a first fault mode is initiated (45), and wherein in another fault case (46), in which the bidirectional switch (28a-c) fails open (46), a second fault mode is initiated (47).

14. The method according to claim 13, wherein in the first fault mode, the switches (21a-c, 22a-c) in the outer legs (16a-c, 17a-c) of the faulty phase circuit are switched or maintained OFF while switching or maintaining the bidirectional switch (28a-c) ON, and wherein the modified switching sequence is applied by producing desired voltage space vectors using combinations of at least two selected basic voltage space vectors corresponding to varying switching states of the switches in the non-faulty phase circuits and the ON state of the bidirectional switch in the faulty phase circuit.

15. The method according to claim 13 or 14, wherein in the second fault mode, the bidirectional switch (28a-c) in the faulty phase circuit is switched or maintained OFF while alternately switching the switches (21a-c, 22a-c) in the outer legs (16a-c, 17a-c) ON, and wherein the modified switching sequence is applied by producing desired voltage space vectors using combinations of at least two selected basic voltage space vectors corresponding to varying switching states of the switches in the non-faulty phase circuits and the one switch switched ON in the respective outer leg in the faulty phase circuit.

16. The method according to anyone of claims 11-15,
wherein in a case in which each outer leg (16a-c, 17a-c) comprises more than one controllable electronic switch (21a-c, 22a-c) all switches of an outer leg are switched ON and OFF simultaneously.

17. The method according to anyone of claims 11-16,
wherein the bidirectional switch (28a-c) is formed by a cascade of two switches (T_{3a-c}, T_{4a-c}) connected in anti-series and each having a freewheeling diode (D₃ₐ, D₄ₐ) connected in anti-parallel to the respective switch (T_{3a-c}, T_{4a-c}), and wherein the first and second fault modes are initiated if at least one of the two switches (T_{3a-c}, T_{4a-c}) in the cascade fails short and open, respectively.

18. The method according to anyone of claims 11-17,
wherein the controllable switches (21a-c, 22a-c, 28a-c) are power semiconductor switches, each semiconductor switch preferably having a freewheeling diode (D_{1a-c}, D_{2a-c}, D_{3a-c}) connected in anti-parallel thereto.

19. The method according to anyone of claims 11-18, further comprising sensing currents in at least some of the outer and inner legs (16a-c, 17a-c) of the phase circuits (14a-c) and/or sensing voltage potentials at at least some of the input and output terminals (8, 9, 13, 19a-c).

20. The method according to claim 19, further comprising monitoring the current and voltage values sensed and detecting conditions representing switches (21a-c, 22a-c, 28a-c) failed open or short based on the sensed current and voltage values.
